# EUROPEAN PATENT APPLICATION

(11) **EP 2 079 222 A1**
(43) Date of publication of application: **15.07.2009**
(21) Application number: 08300023.2
(22) Date of filing: 10.01.2008
(51) Int. Cl.: H04L 29/12, H04L 29/06

(54) **An address translator traversal method for SIP signaling messages by temporary use of TCP transport protocol**

(71) Applicant: Alcatel Lucent, 75008 Paris (FR)
(72) Inventor: Gurbani, Vijay, ILLINOIS, IL 60532 (US); Froment, Thomas, 91310, LONGPONT SUR ORGE (FR)
(74) Representative: Chaffraix, Sylvain

(57) **Abstract**

A signaling server (S) having a first interface (I₁) for exchanging signaling messages with a communication client (C₁) located within a first communication network (N₁), different of a second communication network in which is located the signaling server and connected with it by a NAT.

It further comprises means for, when an incoming signaling message arrives, sending a notification to the communication client to signal the availability of this incoming signaling message, and for delivering it as an reply to a connection-oriented message initiated by the communication client.

## Description

The present invention relates to a communications networks. To be more precise, the present invention is concerned with the problem of sending signaling messages through Network Address Translators (NAT).

Current communications networks set up communications sessions by means of signaling protocols such as H.323 protocol, MGCP (Media Gateway Control Protocol), or SIP (Session Initiation Protocol).

SIP is defined by RFC 3261 of the IETF (Internet Engineering Task Force) and has the two-fold object of enabling:
- connection between two parties;
- negotiation via the SDP of characteristics of the session to be set up (the video data rate, the encoder (CODEC) to be used, etc.).

The negotiation of session characteristics is specified in RFC 3264 "SDP offer/answer model".

A calling party wishing to call another party can send a signaling message or request ("Invite") to a "Proxy" signaling element containing its personal address, the physical address of its terminal (or, more generally, a client) and the personal address of the called party. This proxy is usually called default outbound proxy, and proceeds to then route the request towards the proxy server responsible for serving the domain of the called party, using a DNS (Domain Name Server). When the request reaches this second proxy, it consults a location server to determine the registered address where the called party can be reached (i.e. its physical address). The request is then proxied towards the called party.

Responses follow the reverse of the request path. SIP messages can include a description related to the type of media to be exchanged and the network addresses where the endpoints will receive and send media packets. The media session is typically established directly between the two endpoints without further involving the proxies.

A problem arises, however, with address translators, known as NAT (Network Address Translators) or NAPT (Network Address Port Translators) defined in RFC 1631 "The IP Network Address Translator" and RFC 3022 "Traditional IP Network Address Translator (Traditional NAT)". These translators are designed to interface a first network (typically a private network) with a second network (for example the Internet public network).

The equipments (terminals) of the first network have IP physical addresses valid only in the first network. If they wish to set up communications with external equipments, the address translator assigns them a temporary second address that is valid for the second network and stores the association between the first and second addresses of the client.

The address translator NAT therefore modifies messages transmitted between the two communications networks on the fly by:
- converting the first addresses of the terminals into second addresses in the IP headers of the outgoing messages, i.e. those messages going from the first network to the public second network; and
- converting the second addresses of the terminals into first addresses in the IP headers of the incoming messages, i.e. those messages going from the second network to the first network.
   An address translator NAT therefore has a table for establishing the match between the first and second addresses. These matches are temporary and are eliminated when the connection or session is terminated. Making these associations or matches is usually called "binding".
   In the usual situation where the address translator links a private network and a public network, these first and second addresses are called respectively private and public addresses.
   A problem therefore arises for SIP/SDP (or H.323 or other) signaling messages passing through address translators. This problem is known as "NAT traversal" and is referred to in RFC 3235 of the IETF, "Network Address Translation (NAT) - Friendly Application Design Guidelines".
   Signaling protocols, such as SIP and SDP, are considered as application protocols. The SIP/SDP, for example, can be transmitted by the TCP or UDP, which themselves are situated above the IP in the protocol stack. A SIP message is therefore in fact a series of parameters encapsulated in a TCP or UDP message itself encapsulated in an IP message.
   The address translators NAT modify only the parameters situated at the level of the IP layer, leaving intact the parameters situated in higher layers.
   In other words, the physical addresses contained in the SIP and SDP messages are not modified by the address translators, in contrast to the addresses contained in the IP headers.
   As a result of this the destination of the signaling message (the called client) knows only the first address of the calling client (e.g. its private address). This first address being meaningful only in the first network, no communications session can be set up.
   Because this problem is well known, numerous solutions have been proposed to solving it. Two main approaches to solving this problem can be distinguished: approaches based on the calling client and approaches based on a server or an equipment of the communications network.
   The first category consists of the STUN (Simple Traversal of UDP through NATs) mechanism described in RFC 3489. This mechanism enables a client (or terminal) to know its second address. Accordingly, before sending a message to the second communications network (for example the public network), the calling client sends a request to a STUN server situated in the second network. The second network responds with a message containing the address (and the port) at which it "sees" the client, i.e. its second (e.g. public) address.
   The client can then use that second address to indicate via the SDP at which address it wishes to receive responses.
   This solution, nevertheless, suffers from a serious limitation, since numerous NAT are "symmetrical" and associate a second address with a pair of parties. Thus the second address assigned by the NAT to the client can be different for communication with the STUN server and for the session to be set up with the other party. In such circumstances, a call cannot be set up between the client and the other party.
   Other proposals based on the same principle have been made for improving the situation, such as TURN (Traversal Using Relay NAT) mechanisms. The specifications of the TURN mechanisms are available at the Internet address: http://ietfreport.isoc.org/idref/draft-rosenberg-midcom-turn/

However, neither the STUN mechanism nor the TURN mechanism are per se suited to the SIP protocol.

Accordingly, a new ICE (Interactive Connectivity Establishment) mechanism has been proposed for adapting SIP signaling message traversal. ICE uses STUN, TURN and other techniques to find an effective network path between two endpoints, either of which could be behind a NAT.

The specifications of the ICE mechanism are available at the Internet address http://ietfreport.isoc.org/idref/draft-ietf-mmusic-ice/ But the ICE mechanism requires a specific implementation in the end points.

The second category of solutions relies on equipment within the communications network. The solutions of the first category employ a server within the network (a STUN server, for example) but at the initiative of the client. In contrast, in this second family of solutions, the initiative and the implementation of the NAT traversal solutions remain with network equipment.

A first solution belonging to this family is that of associating an application gateway with the address translator NAT, for example. This mechanism is known as the ALG (Application Layer Gateway or Application-Level Gateway) and is defined in paragraph 2.9 of RFC 2663 "IP Network Address Translator (NAT) Terminology and Considerations" published in August 1999.

This gateway (or a NAT having the functions of such a gateway) has means for understanding application protocols used by messages. It can in particular understand the content of signaling messages and translate physical addresses contained in SDP messages in order for the parties to exchange their second (e.g. public) addresses and not their first addresses so that communications sessions can be set up.

A variant of this solution consists in using an SBC (Session Border Controller) situated on the paths of the signaling messages. This type of product controls the communications sessions and transmission of signaling messages between the two networks. More precisely, the SBC can serve as an SIP "proxy" signaling element that can control media transmission ("media proxy") means using a protocol such as Megaco in order for communications sessions to be set up appropriately between the parties.

However, another technical problem arises in that the address translators NAT do not keep the matches between first and second addresses after termination of the connection or session.

The SIP signaling messages can be transported by the TCP (Transmission Control Protocol) or the UDP (User Datagram Protocol). The TCP keeps a connection open as long as no action is taken to terminate the session. Also, if a SIP session using the TCP is used, the address translator NAT keeps the match until termination of the TCP connection.

However, with the UDP, no connection is set up. Also, the address translator NAT keeps the association only temporarily, i.e. until the expiry of a predetermined time.

Consequently, the use of the UDP (or any other connectionless transport protocol) to transport SIP signaling presents problems in NAT traversal.

However, using the TCP also causes problems, in that it obliges the various participants to keep connections open. The server or proxy must then keep open as many connections as there are SIP terminals or clients with which it is in communication.

Each TCP connection represents a large amount of contextual data, which represents a heavy load for the SIP proxy. The architect of a communications network can also be confronted with very concrete problems such as the threshold in respect of the maximum number of TCP connections that an operating system such as Linux can manage (65535 simultaneous connections).

Also, at present, most SIP architectures are based on the UDP transport protocol.

In order to alleviate the temporary character of the associations between first and second addresses, signaling messages are exchanged periodically between the two parties merely to keep the association active.

The signaling messages are usually SIP "Register" messages including a header "Expires" containing the expiry period of the association. This expiry period can be negotiated between the client and the server or proxy. For example, at the time of the first "Register" message, the client indicates a first value. The server or proxy responds with a message "200 OK" containing a second value in the header "Expires". According to the standard, the client must then use this second value as the expiry period: it then sends a "Register" message at regular intervals determined by this second value.

This approach is known as "UDP Hole Punching".

TCP nevertheless has advantages that make it necessary for certain applications.

For example, if a message is large, UDP divides it into smaller datagrams, which can lead to fragmentation problems. The threshold depends on the communications network and is determined by its maximum transmission unit (MTU). This threshold is 1300 bytes for an Ethernet^{™} network.

As explained by paragraph 18.1.1 of RFC 3261, UDP can no longer be used once a SIP message exceeds a size corresponding to this threshold less a buffer value of 200 bytes. TCP (or another protocol providing for congestion control) must then be used.

Consequently, neither the use of UDP nor that of TCP is satisfactory, and there exists a need for a solution alleviating the technical problems raised by either of the prior art solutions.

The aim of the present invention is to propose such a solution. A first object is a signaling server comprising:
- a first interface for exchanging signaling messages with a communication client located within a first communication network, different of a second communication network in which is located the signaling server and connected with it by a Network Address Translator, this first interface being arranged for exchanging connection-less messages with the communication client in order to keep open the Network Address Translator, and
- a second interface for receiving an incoming signaling messages for the first communication client.

The signaling server is new in that it further comprises means for
- when the incoming signaling message arrives, sending a notification to the first communication client to signal the availability of the incoming signaling message, and for
- delivering said incoming signaling message as a reply to a connection-oriented message initiated by said communication client.

According to an embodiment of the invention, the first communication network is a private network and the second communication network is a public network.

The connectionless messages may use the UDP protocol and the connection-oriented message may use the TCP protocol.

The notification may be a "Notify" message according to RFC 3265 of IETF.

Further, the signaling server may comprise means to receive "Subscribe" messages according to RFC 3265 from the communication client.

A second object of the invention is a method for establishing a communication session between a first communication client located within a first communication network and a second communication client, through a signaling server located in a second communication network different of the first communication network and connected with it by a Network Address Translator.

The method comprises a step of exchanging connection-less messages between the first communication client and the signaling server in order to keep the network address translator open, and is new in that it further comprises the steps of:
- at receipt of an incoming signaling message from the second communication client to the first communication client, transmission by the signaling server a notification message to the first communication client,
- at receipt of the notification message, transmission by the first communication client of a connection-oriented message to the signaling server;
- as a reply to this connection-oriented message, transmission by the signaling server of the incoming signaling message.

Thus a TCP connection is set up only when necessary, and it is not necessary to maintain a TCP connection for all communications sessions simultaneously. In this way, the problems raised by too many connections do not arise, and the shortcomings linked to the UDP protocol are resolved by setting up a TCP connection "on demand".

The invention, its features and its advantages, become more clearly apparent in the light of following description with reference to the appended figures.

Figure 1 illustrates an architecture in which the signaling server according to the invention can be deployed.

Figure 2 is a diagram of one example of a dialog that can be implemented between a communication client and the signaling server according to the invention.

Although most of the description related to TCP and UDP protocols, the invention should be understood as applying also to any connectionless transport protocols and connection-oriented transport protocols, presenting the same issues as UDP and TCP.

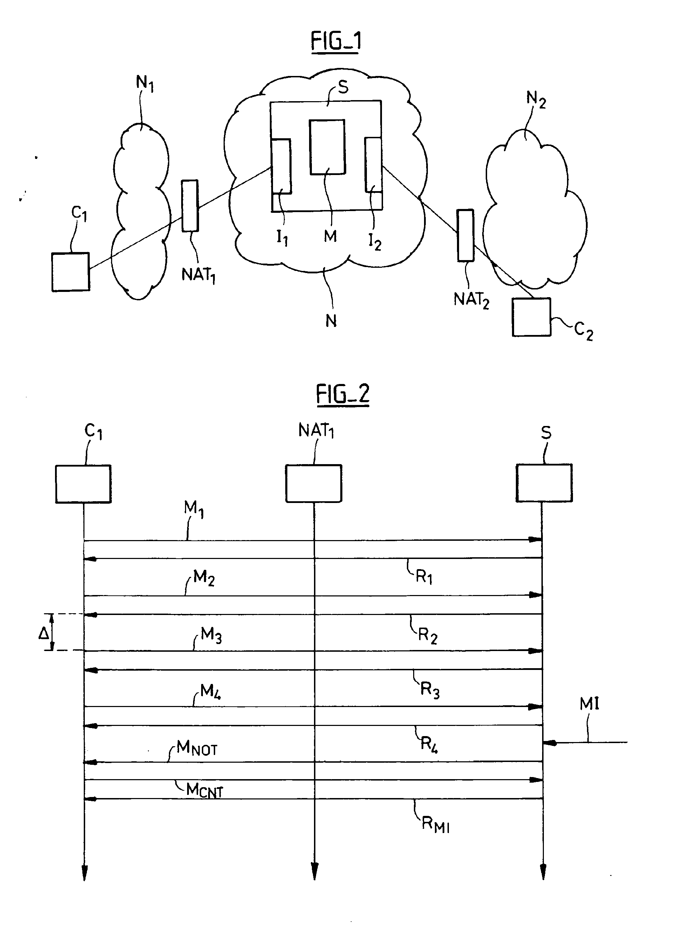

In the network architecture example illustrated by Figure 1, two communication clients C₁ and C₂ are connected to a communications network N. The communication client C₁ belongs to a first communications network N₁ that is connected to a second communications network N by an address translator NAT₁.

The communication client C₁ has a first address usable in the first communications network N₁: it can use its first address to communicate with equipments belonging to this first network (including the equipment NAT₁), but not with external equipments. To communicate with external equipments, a second address is temporarily assigned to it by the address translator NAT₁.

This address translator NAT₁ therefore maintains an association between the first address of the client C₁ and its second address. Messages coming from or going to this client C₁ are analyzed and the first addresses are translated into second addresses and vice-versa.

The first communications network can be a private communications network, for example, and the second communications network can be a public network.

The communication client C₁ can be connected to the communication client C₂ via a signaling server S. This signaling server is typically an "SIP proxy". With an IMS (IP Multimedia Subsystem) architecture as specified by the 3GPP or TISPAN standardization body, this server or proxy can be a CSCF (Call Session Control Function) element.

The signaling server S can also be a session border controller (SBC).

For the most part, the following description relates only to the connection between the client C₁ and the signaling server S. The connection between the client C₂ and the server S is not described in detail.

The example illustrated by Figure 1 represents a highly simplified implementation enabling the invention to be better understood. Thus the communication client C₂ belongs to a third network N₂ connected to the second communications network N by a second address translator NAT₂.

With a real deployment, there can be other equipments between the signaling server S and the communication client C₂. For example, the client can be connected to another signaling server and the two signaling servers can communicate directly or via other servers.

The Figure 1 example nevertheless enables the essence of the invention to be understood without regard to equipments that have no direct role to play in the context of the invention.

In order to maintain the association between the first and second addresses, the communication client C₁ sends register messages to the signaling server S. These messages are typically sent periodically, possibly after negotiation.

Figure 2 is a diagram of exchanges between the client C₁ and the signaling server S. Each vertical line represents an element of the network, respectively the client C₁, the address translator NAT₁, and the signaling server S. Time increases in the downward direction. The horizontal arrows represent signaling messages exchanged between these network elements.

The register message M₁ is the initial register message. It specifies a first value of the refresh delay. This first value can be high, for example 3600 seconds.

The signaling server S responds with a response message R₁ that can contain a second value, for example 30 seconds.

The client C₁ can then use the second value sent in the response message R₁. In the absence of any second value, it can use the first value that it determined beforehand itself.

At intervals Δ corresponding to the refresh delay value determined in this way, the communication client C₁ sends a signaling message M₂, M₃, M₄... to the signaling server S, which responds with respective response messages R₂, R₃, R₄...

The signaling server has an interface I₁ adapted to receive these register messages and to respond with a response message.

These register messages can be SIP "Register" messages. The refresh delay can be contained in the "Expire" header of these messages. The response messages can be SIP "200 OK" messages and the refresh delay, if any, can be contained in an "Expire" header.

All these register messages M₁, M₂, M₃, M₄... and response messages R₁, R₂, R₃, R₄... are transported by the UDP. The register messages specify in a "Via" header that the transport protocol must be UDP.

Such a Via header can resemble this:
Via: SIP/2.0/TCP client.a.example.com:5620;branch=z9hG4bK74bf9

It should be stressed at this stage that re-registering is only a possible embodiment. Other methods could be used to keep the NAT open for UDP traffic, like for instance periodically sending CR/LF character. The present invention should be understood as independent of the method used for keeping the NAT open.

The signaling server S therefore keeps no TCP connection open for managing the connection with the client C₁.

In parallel, the communication client C₁ subscribes to an event maintained within the signaling server S to reflect whether an incoming message is available to be retrieved. This event could be named "NAT-open" and could be subscribed to by using the mechanisms described in RFC 3265 entitled "Session Initiation Protocol (SIP) - Specific Event Notification" and dated from June 2002.

The subscription could be aligned along the SIP registration life-cycle. The "Subscribe" request could be thus sent by the communication client C₁ just after the "Register" request. Subscriptions, just like Registrations, should be periodically refreshed and these refreshes could be sent just after the re-registration. In a similar way, subscriptions are terminated just after un-registers occur.

The "Subscribe" signaling message (or request) contains several headers. Among them,
- the "Event" header is set to the name of the specific event used by the present invention. A possible name may be "nat-open".
- the "Expires" header could be set to the same value than the value of "expires" header of the "Register" message.

As shown in the figure 2, the initial "subscribe" request M_{sub1} is sent just after the first "Register" message M₁. Subsequent "Subscribe" messages M_{sub2}, M_{sub3}, M_{sub4} follow their "Register" counterparts M₂, M₃, M₄...

Similarly, response messages R_{sub1}, R_{sub2}, R_{sub3}, R_{sub4} ... of the "Subscribe" messages are sent by the signaling server S, just after the response messages R₁, R₂, R₃, R₄ ... of the "Register" messages.

The two cycles go on along the time, but are not shown in the figure 2 after the response message R_{sub4} for clarity reason.

At a given time, the signaling server S can receive an incoming signaling message MI from the second communication client C₂. This can be an invitation signaling message, for example a SIP "Invite" message, the object of which is to invite the communication client C₁ to accept the setting up of a communications session with the calling communication client C₂.

This communications session can require the use of a connection, e.g. a TCP connection, a TLS connection, a SCTP connection...

It is possible for this request to be systematic and for any invitation coming from a client C₂ to lead to the creation of a connection for transporting the session to be set up.

It is equally possible for a choice to be made between the connection-oriented transport protocol (TCP...) and the connectionless transport protocol (UDP...). That choice can be determined by a parameter in the incoming signaling message MI. That parameter can be inserted into the SIP "Contact" header.

The choice can equally be determined by the signaling server S, possibly taking into account parameter(s) inserted into the incoming signaling message MI.

In this example, however, it is assumed that the communications session requires the use of TCP as the transport protocol.

The incoming signaling message is received via an interface I2 of the signaling server S and is stored temporarily in a buffer memory M.

At the moment of arrival of this incoming message MI or as soon as possible after, a notification M_{NOT} is sent to the communication client C₁.

Such a notification is sent by using a "Notify" message compliant with RFC 3265 of IETF. The signaling server S is adapted to send a "Notify" message to each communication clients that has subscribed to the "nat-open" event. For this reason, it maintains for each existing specific event, a list of SIP entities which has subscribed to it.

The "Event" header of the SIP "Notify" message is set to the same specific name that the one chosen for the "Subscribe" message, i.e. in this example, "nat-open".

The "Contact" header may be used to set a address/port to be used by the communication client C₁ when initiating a connection with the signaling server S. It can also be used for setting a transport protocol. Such a "Contact" header may look as:
contact: <sip: proxyaddress: port;transport=tcp>"

When receiving this message M_{NOT}, the communication client C₁ initiates a connection with the signaling server S. The type of this connection could be determined by the content of the "Contact" header of the notification message M_{NOT}, e.g. by the "transport" parameter.

The communication client C₁ sends for this purpose a connection-oriented message M_{CNT} to the signaling server S.

Several methods may be used by the communication client to initiate the connection. For instance, it could send a new re-registration message, transported by the connection-oriented transport protocol (namely here, TCP). This re-registration message could be sent according to the usual cycle, i.e. after an interval Δ has elapsed since last re-registration.

Alternatively, an "Info" message, an "Options" message, an "Update" message... could be sent; for example as soon as possible after the receipt of the notification message M_{NOT}.

The aim of this new message M_{CNT} is to initiate a connection between the signaling server S and the client.

Once this connection established (through the NAT), the signaling server S can use it to deliver the incoming signaling message MI using this connection-oriented transport protocol. It delivers the incoming signaling message as a reply R_{MI} to this connection-oriented message sent by the communication client.

One shall remind that the rational for this mechanism is that NATs usually implement firewall feature. They let only messages flow when coming from the client (e.g. situated in a private network), or when coming from the server if this is a reply of a previously received message. Therefore, the client is unable to initiate a connection by sending a first initiation message.

The invention lies in a tricky mechanism to have the client initiate the connection through the NAT, in order to have the server takes benefit of the created connection to deliver the incoming message.

The invention has the advantage over existing solutions that it does not require any protocol stacks or additional mechanisms. On the contrary, it bases itself on existing mechanisms specified in the RFC 3261 and 3265 of the IETF. It therefore does not need modifications of the deployed devices or specific apparatuses or servers, but works with standard SIP user agents and SIP servers.

In addition, thanks to the invention, a connection is open only when messages are to be sent. The rest of the time, the logical session between the client and the server is maintained by exchanges of connection-less messages.

The invention allows then to optimize the use of connection-less communications and connected communications, taking benefit of both of them when appropriate.

## Claims

1. Signaling server (S) having a first interface (I₁) for exchanging signaling messages with a communication client (C₁) located within a first communication network (N₁), different of a second communication network in which is located said signaling server and connected with it by a Network Address Translator (NAT₁), said first interface being arranged for exchanging connection-less messages with said communication client in order to keep said Network Address Translator open, and a second interface (I₂) for receiving an incoming signaling messages for said first communication client (C₁),
**characterized in that** it further comprises means for, when said incoming signaling message arrives, sending a notification (M_{NOT}) to said communication client to signal the availability of said incoming signaling message, and for delivering said incoming signaling message as an reply (R_{MI}) to a connection-oriented message (M_{CNT}) initiated by said communication client.

2. Signaling server according to previous claim, wherein said first communication network is a private network and said second communication network is a public network.

3. Signaling server according to any of the previous claims, wherein said connectionless messages use the UDP protocol and said connection-oriented message uses the TCP protocol.

4. Signaling server according to any of the previous claims, wherein said notification is a "Notify" message according to RFC 3265 of IETF.

5. Signaling server according to any of the previous claims, further comprising means to receive "Subscribe" messages according to RFC 3265 from said communication client.

6. Method for establishing a communication session between a first communication client (C₁) located within a first communication network (N₁) and a second communication client (C₂), through a signaling server (S) located in a second communication network (N₂) different of said first communication network and connected with it by a Network Address Translator (NAT₁), comprising a step of exchanging connection-less messages between said first communication client and said signaling server in order to keep said network address translator open, **characterized in that** it further comprises the steps of
- at receipt of an incoming signaling message from said second communication client to said first communication client, transmission by said signaling server a notification message to said first communication client,
- at receipt of said notification message, transmission by said first communication client of a connection-oriented message to said signaling server;
- as a reply to said connection-oriented message, transmission by said signaling server of said incoming signaling message.
